# EUROPEAN PATENT SPECIFICATION

(11) **EP 0 776 613 B1**
(45) Date of publication and mention of the grant of the patent: **30.06.1999**
(21) Application number: 96203317.1
(22) Date of filing: 25.11.1996
(51) Int. Cl.: A23L 3/00, A23B 4/12, A23B 4/24, A23L 3/358, A23L 3/3508

(54) **Method of disinfection of foodstuff**
Nahrungsmittelndekontaminationsverfahren
Procédé de décontamination d'aliments

(30) Priority: 27.11.1995 US 565303
(43) Date of publication of application: 04.06.1997
(73) Proprietor: Eka Chemicals AB, 445 80 Bohus (SE)
(72) Inventor: Chen, T.C., Starkville, Mississippi State, MS 39759 (US)
(74) Representative: Jönsson, Christer

(56) References cited:
- EP-A- 0 087 049
- WO-A-91/08981
- WO-A-93/04595
- NL-C- 95 960
- US-A- 3 545 982
- US-A- 3 792 177
- US-A- 4 518 585
- US-A- 4 647 458
- US-A- 4 915 955

## Description

The present invention relates to a method of disinfection in food processing involving the use of hydrogen peroxide in combination with antimicrobial agents selected from the group consisting of benzoic acid and phosphoric acid to reduce the microbial count in food-related applications.

Disinfection is a world-wide problem within the foodstuff industry and numerous efforts have been made with additives to attempt to reduce the microbial load on fresh muscle foods. Some of the techniques used have been by chilling or dipping the products with antimicrobial compounds. However, the use of antimicrobial compounds has been limited due to its efficacy as well as cost.

U.S. Patent No. 3,792,177 to Nakatani et al. relates to a method for improving the quality of foodstuff by the addition to the foodstuff of a mixture of a water soluble metal phosphate-hydrogen peroxide adduct and a water soluble acid metal phosphate, the ratio of said adduct to said metal phosphate being about 1 part by weight to from about 0.5 to about 9 parts by weight.

U.S. Patent No. 4,915,955 to J. Gömöri relates to a process for preparing a storage stable concentrate comprising admixing (i) an inorganic acid such as 75% phosphoric acid, 65% aqueous nitric acid or 69% aqueous sulphuric acid in water with (ii) a silver composition selected from silver salts and silver salt complexes and (iii) an organic acid stabiliser selected from e.g. tartaric acid and/or citric acid.

EP B1 87 049 relates to a disinfectant for hospitals, schools, breweries, laundries, etc. comprising a composition comprising 1-15% H₂O₂ ,1-30% phosphorous compound, 0.1-5% metal cheating agent, 0-20% surfactant and the rest water.

U.S. Patent No. 4,518,585 relates to a composition for disinfection of dental and medical equipment by the use of a composition comprising H₂O₂, Tetronic 908 and H₃PO₄, benzotriazole, Acitrol and deionized water.

U.S. Patent No. 5 264 229 relates to a process for extending the shelf life of poultry and seafood by introducing food grade H₂O₂ and food grade surface active agents into the chiller water to wash off bacteria on the surface of the food product. The agents are alkylaryl sulfonates, sulfates, sulfonates of oils and fatty acid, sulfate of alcohols and sulfosuccinates.

WO 91/08981 discloses a composition for disinfecting swimming pools or brewery equipment comprising hydrogen peroxide stabilised with citric acid, tartaric acid and phosphate ions.

WO 93/04595 discloses a composition containing hydrogen peroxide, glycerol and optionally an organic acid for use in the food industry. The composition is used in the form of a solution having a concentration of 0.2-0.3 wt% of hydrogen peroxide.

NL-A-95960 discloses a method of preservation by using a 0.1-0.5% hydrogen peroxide solution having a pH of 3-5.

The term "shelf-life" usually refers to the period of quality deterioration by decreasing nutritional value, colour changes, development of off-flavours, and/or textural changes occurring during storage, microbial spoilage that results in physical and chemical changes is one of the principal factors responsible for the relatively short shelf-life of muscle foods.

Said prior art, however, say nothing about the findings which constitute the basis for the present invention, namely that a combination of hydrogen peroxide and an antimicrobial agent selected from benzoic acid, phosphoric acid, or combinations thereof, at low concentration effectively reduces the microbial count on foodstuff, especially fresh muscle foods, and particular poultry, fish or other seafood products.

According to the present invention it has surprisingly been found that a synergistic antimicrobial effect in reducing the microbial count in foodstuff occurs when hydrogen peroxide is used in combination with an additive selected from benzoic acid or phosphoric acid or combinations thereof.

Said findings permit the use of very low concentrations of hydrogen peroxid and the selected additive which allows the application dosage, due to the strong germicidal synergistic effect as obtained, to be cut down drastically.

The consequences of the reduced dosages are e.g. a better effect, a better acceptance of hydrogen peroxide as sanitizing agent as well as decreased costs for preservation.

The foodstuff is treated with a composition containing hydrogen peroxide, preferably of food grade quality, and the additive, which composition preferably is in the form of an aqueous solution of the components. The concentration of hydrogen peroxide in the composition is from 0.001 to 0.035 wt%, preferably from about 0.005 to about 0.035 wt%, and the concentration of the additive is from 0.001 to 0.5 wt%, preferably from about 0.005 to about 0.1 wt%. Suitably the composition is substantially free from substances that are unacceptable for application to foodstuff or substances the destabilise hydrogen peroxide, and preferably also from substances that just increases the cost without effecting in any significant improvement. Thus, it is preferred to exclude heavy metals such as silver, organic acids such as tartaric acid and citric acid, particularly in combination, and surfactants such as organic sulfates or sulfonates. Most preferably the composition consists essentially of an aqueous solution of hydrogen peroxide and an additive selected from benzoic acid, phosphoric acid or a mixture thereof. The composition can be prepared by simply mixing the ingredients therein.

The antimicrobial combination according to the invention can be applied to the foodstuff by spraying, dipping, brushing, painting or in any other way known to the man skilled in the art.

The temperature as maintained during the application process is suitably from about -10 to about +50 °C, preferably from about -4 to about +32 °C, and most preferably at about ice water temperature.

Example: The synergistic antimicrobial effect of hydrogen peroxide and benzoic acid (Fisher Scientific Company, A-65), as well as hydrogen peroxid and phosphoric acid (85 wt%, Fisher Scientific Company, A-242) on poultry chilling water micro-organisms were tested. The poultry meat microbial suspensions containing approximately 10⁴ CFU were prepared by mixing 1 ml of the poultry wash water with a form of nutrient agar to allow bacteria colonies to form on the plates for later "colony forming unit" (CFU) counts. In addition, a factor of ten (10) serial dilutions was also made for each test in the event that bacterial formation might be "too numerous to count" (TNTC). Lower log numbers of bacteria found by the plate counting method generally indicate a greater degree of food disinfection, and a higher potential for increased shelf life due to the reduction of slime-forming micro-organisms. Although there is no current industry standard as to an acceptable log number of bacteria found on food for human consumption, such results are useful in the analysis of food disinfection data for comparison purposes.

Hydrogen peroxide and the selected additives were used individually or in combinations. Microbial suspensions (50 ml) were randomly assigned to one of the following treatments:
1) non-treated controls; (2) hydrogen peroxide only (3) additive only; (4) hydrogen peroxide combined with selected additives. The length of the treatment time was 30 min.

The concentration of hydrogen peroxide was 0.035 wt%, of the benzoic acid 0.1 wt%, and of phosphoric acid 0.085 wt%

Comparative tests were performed in the same way with hydrogen peroxide at a concentration of 0.035 wt% and L-ascorbic acid, sodium pyrophosphate, sodium tripolyphosphate and tri-sodium phosphate as additives at a concentration of 0.1 wt%.

Total plate counts were conducted immediately after each treatment. Serial dilutions of the mixture were plated and incubated at 30°C for 48 hrs and the Total Plate Counts (TPC).

**Table 1**

| Synergistic Effects of Hydrogen Peroxide and the additive according to the invention on TPC of Poultry Meat Wash Water¹ TPC (log CFU/ml) ³^{,}⁴^{,}⁵ | | | | | | |
|---|---|---|---|---|---|---|
| Treatment | R1 | R2 | R3 | R4 | R5 | Overall Mean |
| Control | 4.59 | 3.78 | 3.85 | 4.22 | 4.62 | 4.21B |
| H₂O₂ | 3.30 | 2.80 | 2.82 | 2.77 | 2.98 | 2.93A |
| H₂O₂ | 3.30 | 2.80 | 2.82 | 2.77 | 2.98 | 2.93B |
| Benzoic acid | 1.70 | 2.34 | 2.65 | 1.97 | 3.61 | 2.45B |
| Benzoic acid + H₂O₂ | ND | -0.30 | ND | ND | 0.18 | -0.02A |
| H₂O₂ | 3.30 | 2.80 | 2.82 | 2.77 | 2.98 | 2.93C |
| Phosphoric acid | 2.24 | 2.08 | 1.79 | 1.51 | 2.33 | 1.99B |
| Phosphoric acid + H₂O₂ | ND | ND | 0.30 | ND | 0.18 | 0.10A |

| | | | | | | |
|---|---|---|---|---|---|---|
| ¹ The chicken wash water has been kept in a refrigerator for more than 30 days. | | | | | | |
| ³ Each mean represents the mean of 2 observations. | | | | | | |
| ⁴ A-C, means in the same column not followed by the same letter are significantly different (P<.05) | | | | | | |
| ⁵ ND = non-detectable | | | | | | |

COMPARATIVE TESTS

**Table 2**

| Effects of Hydrogen Peroxide and Commonly Used additives on TPC of Poultry Mean Wash Water¹ | | | | | | |
|---|---|---|---|---|---|---|
| Treatment | TPC (log CFU/ml)³^{,}⁴^{,}⁵ | | | | | |
| | R1 | R2 | R3 | R4 | R5 | Overall Mean |
| Control | 4.59 | 3.78 | 3.85 | 4.22 | 4.62 | 4.21B |
| H₂O₂ | 3.30 | 2.80 | 2.82 | 2.77 | 2.98 | 2.93A |
| H₂O₂ | 3.30 | 2.80 | 2.82 | 2.77 | 2.98 | 2.93B |
| L-ascorbic acid | 3.49 | 3.37 | 3.84 | 3.62 | 4.58 | 3.78B |
| L-ascorbic acid + H₂O₂ | 1.89 | 0.48 | 1 02 | -0.30 | 3.76 | 1.37A |
| H₂O₂ | 3.30 | 2.80 | 2.82 | 2.77 | 2.98 | 2.93B |
| Sodium pyrophosphate | 3.43 | 3.14 | 367 | ND | 4.55 | 2.96B |
| Sodium pyrophosphate + H₂O₂ | 0.65 | -0.30 | 0.60 | 0.30 | 1.86 | 0.62A |
| | 2.10² | 1.60² | 2.27² | 2.00² | 3.37² | 2.27B |
| H₂O₂ | 3.30 | 2.80 | 2.82 | 2.77 | 2.98 | 2.93BC |
| Sodium tripolyphosphate | 3.61 | 3.33 | 3.76 | 3.25 | 4.63 | 3.72C |
| Sodium tripoly- | ND | 0.18 | 0.40 | 0.48 | 2.56 | 0.72A |
| phosphate + H₂O₂ | ND² | 2.11² | 2.53² | 2.35² | 3.86² | 2.17B |
| H₂O₂ | 3.30 | 2.80 | 2.82 | 2.77 | 2.98 | 2.93B |
| Trisodium phosphate | 2.86 | 2.83 | 3.35 | 2.71 | 4.23 | 3.20B |
| Trisodiumphosphate+H₂O₂ | 1.86 | 0.65 | 0.54 | -0.30 | 1.41 | 0.83A |

| | | | | | | |
|---|---|---|---|---|---|---|
| ¹ The chicken wash water has been kept in a refrigerator for more than 30 days. | | | | | | |
| ² When diluted to lower concentration (1:10), sodium pyrophosphate + H₂O₂ and sodium tripolyphosphate have higher number of bacteria. | | | | | | |
| ³ Each mean represents the mean of 2 observations. | | | | | | |
| ⁴ A-C,means in the same column not followed by the same letter are significantly different (P<.05). | | | | | | |
| ⁵ ND = non-detectable | | | | | | |

## Claims

1. A method of disinfection of foodstuff, **characterised** in that the method comprises treating the foodstuff with a composition containing from 0.001 to 0.035 wt% of hydrogen peroxide and from 0.001 to 0.5 wt% of an additive selected from benzoic acid, phosphoric acid or a mixture thereof to substantially reduce the microbial count.

2. A method as claimed in claim 1, **characterised** in that the composition is substantially free from silver.

3. A method as claimed in any one of the claims 1-2, **characterised** in that the composition is substantially free from surfactants.

4. A method as claimed in any one of the claims 1-3, **characterised** in that the composition is substantially free from tartaric acid and citric acid.

5. A method as claimed in any one of the claims 1-4, **characterised** in that the composition contains from 0.005 to 0.035 wt% of hydrogen peroxide.

6. A method as claimed in any one of the claims 1-5, **characterised** in that the composition contains from 0.005 to 0.1 wt% of the additive selected from benzoic acid or phosphoric acid.

7. A method as claimed in any one of the claims 1-6, **characterised** in that composition consists essentially of an aqueous solution of hydrogen peroxide and an additive selected from benzoic acid or phosphoric acid.

8. A method as claimed in any one of the claims 1-7, **characterised** in that the additive is benzoic acid.

9. A method as claimed in any one of the claims 1-8, **characterised** in that the additive is phosphoric acid.

10. A method as claimed in any one of the claims 1-9, **characterised** in that the foodstuff is fresh muscle food selected from poultry, fish, or other seafood products.

## Patentansprüche

1. Verfahren zur Desinfektion von Nahrungsmitteln, dadurch gekennzeichnet, daß das Verfahren Behandeln der Nahrungsmittel mit einer Zusammensetzung umfaßt, die 0,001 bis 0,035 Gew.-% Wasserstoffperoxid und 0,001 bis 0,5 Gew.-% eines aus Benzoesäure, Phosphorsäure und einem Gemisch davon ausgewählten Zusatzes enthält, um die Mikrobenzahl wesentlich zu vermindern.

2. Verfahren nach Anspruch 1, dadurch gekennzeichnet, daß die Zusammensetzung im wesentlichen frei von Silber ist.

3. Verfahren nach einem der Ansprüche 1 bis 2, dadurch gekennzeichnet, daß die Zusammensetzung im wesentlichen frei von grenzflächenaktiven Mitteln ist.

4. Verfahren nach einem der Ansprüche 1 bis 3, dadurch gekennzeichnet, daß die Zusammensetzung im wesentlichen frei von Weinsäure und Zitronensäure ist.

5. Verfahren nach einem der Ansprüche 1 bis 4, dadurch gekennzeichnet, daß die Zusammensetzung 0,005 bis 0,035 Gew.-% Wasserstoffperoxid enthält.

6. Verfahren nach einem der Ansprüche 1 bis 5, dadurch gekennzeichnet, daß die Zusammensetzung 0,005 bis 0,1 Gew.-% des aus Benzoesäure und Phosphorsäure ausgewählten Zusatzes enthält.

7. Verfahren nach einem der Ansprüche 1 bis 6, dadurch gekennzeichnet, daß die Zusammensetzung im wesentlichen aus einer wäßrigen Lösung von Wasserstoffperoxid und einem aus Benzoesäure und Phosphorsäure ausgewählten Zusatzes besteht.

8. Verfahren nach einem der Ansprüche 1 bis 7, dadurch gekennzeichnet, daß der Zusatz Benzoesäure ist.

9. Verfahren nach einem der Ansprüche 1 bis 8, dadurch gekennzeichnet, daß der Zusatz Phosphorsäure ist.

10. Verfahren nach einem der Ansprüche 1 bis 9, dadurch gekennzeichnet, daß die Nahrungsmittel frisches Muskelfleisch, ausgewählt aus Geflügel, Fisch oder anderen Meeresfruchtprodukten, sind.

## Revendications

1. Procédé de désinfection de denrées alimentaires, caractérisé en ce qu'il comprend le traitement des denrées alimentaires par une composition contenant 0,001 à 0,035 % en poids de peroxyde d'hydrogène et 0,001 à 0,5 % en poids d'un additif choisi parmi l'acide benzoïque, l'acide phosphorique et leurs mélanges, pour réduire de manière importante les microbes dénombrés.

2. Procédé selon la revendication 1, caractérisé en ce que la composition est pratiquement exempte d'argent.

3. Procédé selon la revendication 1 ou 2, caractérisé en ce que la composition est pratiquement exempte de tensioactifs.

4. Procédé selon l'une quelconque des revendications 1 à 3, caractérise en ce que la composition est pratiquement exempte d'acide tartrique et d'acide citrique.

5. Procédé selon l'une quelconque des revendications 1 à 4, caractérise en ce que la composition contient 0,005 à 0,035 % en poids de peroxyde d'hydrogène.

6. Procédé selon l'une quelconque des revendications 1 à 5, caractérisé en ce que la composition contient 0,005 à 0,1 % en poids de l'additif choisi parmi l'acide benzoïque et l'acide phosphorique.

7. Procédé selon l'une quelconque des revendications 1 à 6, caractérisé en ce que la composition est constituée essentiellement d'une solution aqueuse de peroxyde d'hydrogène et d'un additif choisi parmi l'acide benzoïque et l'acide phosphorique.

8. Procédé selon l'une quelconque des revendications 1 à 7, caractérisé en ce que l'additif est l'acide benzoïque.

9. Procédé selon l'une quelconque des revendications 1 à 7, caractérisé en ce que l'additif est d'acide phosphorique.

10. Procédé selon l'une quelconque des revendications 1 à 9, caractérisé en ce que les denrées alimentaires sont des denrées constituées de muscles frais, choisies parmi la volaille, le poisson et les autres produits alimentaires marins.
